(19) **Europäisches Patentamt European Patent Office Office européen des brevets**

(11) **EP 3 265 963 B1**

(12) **FASCICULE DE BREVET EUROPEEN**

(45) Date de publication et mention de la délivrance du brevet:
**30.09.2020 Bulletin 2020/40**

(21) Numéro de dépôt: **16712389.2**

(22) Date de dépôt: **04.03.2016**

(51) Int Cl.:
***G06K 19/077*** *(2006.01)*

(86) Numéro de dépôt international:
**PCT/FR2016/000036**

(87) Numéro de publication internationale:
**WO 2016/139395 (09.09.2016 Gazette 2016/36)**

(54) **CARTE À PUCE SANS CONTACT AVEC ANTENNE OPTIMISÉE POUR PERMETTRE L'EMBOSSAGE DE CARACTÈRES**

KONTAKTLOSER CHIPCARD MIT EINER OPTIMIERTEN ANTENNE ZU ERMÖGLICHEN VON CHARAKTER-PRÄGUNG

CONTACTLESS CHIP CARD WITH OPTIMIZED ANTENNA TO ALLOW THE EMBOSSING OF CHARACTERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2015 FR 1500412**

(43) Date de publication de la demande:
**10.01.2018 Bulletin 2018/02**

(73) Titulaire: **Smart Packaging Solutions (SPS) 13106 Rousset Cedex (FR)**

(72) Inventeurs:
• **MEAR, Benjamin 13790 Rousset (FR)**
• **KAMBOURIAN, Haig 13790 Rousset (FR)**
• **TEBOUL, Deborah 13790 Rousset (FR)**

(74) Mandataire: **Nicolle, Olivier Ipon Global 29, boulevard Georges Seurat 92200 Neuilly-sur-Seine (FR)**

(56) Documents cités:
**EP-A2- 1 107 175    US-A- 6 049 461**

## Description

L'invention concerne les cartes d'identification sans contact ou mixtes à fonctionnement à contact et sans contact, pourvues d'une zone de caractères embossés sur le corps de carte, et d'une antenne intégrée au corps de carte pour communiquer à distance avec un lecteur de cartes. Les cartes bancaires à fonctionnement sans contact et réalisées au format ISO 7816-1 constituent l'exemple le plus répandu des cartes d'identification auxquelles s'applique l'invention.

## Etat de la technique

La plupart des cartes à puce sans contact ou cartes duales à fonctionnement mixte à contact et sans contact connues comportent un corps de carte, un module électronique inséré dans une cavité du corps de carte et pourvu d'une puce microélectronique, et une antenne disposée dans le corps de carte et électriquement connectée à des plots de sortie de la puce microélectronique.

Alternativement il existe des cartes à puce dont l'antenne du corps de carte est en couplage inductif avec le module électronique pourvu lui-même d'une antenne.

L'antenne du corps de carte est généralement constituée de spires réalisées à l'aide de pistes électriquement conductrices, réalisées sur un insert ou substrat flexible qui est intégré au corps de carte pendant l'assemblage de la carte.

Afin d'obtenir des performances de communication sans contact adéquates, et en particulier une portée de fonctionnement suffisante, les spires de l'antenne doivent être de grande taille, typiquement au format dit ID1. Le format ID-1 pour des cartes à puce répond aux mesures de 85,60 $\times$ 53,98 mm. Il est communément utilisé pour les cartes bancaires.

Or le corps de carte comporte par ailleurs une zone d'embossage, comportant des caractères alphanumériques en relief, conformes à la norme ISO 7811-1.

Compte tenu du format de l'antenne, il existe en général une zone de recouvrement entre la zone des caractères embossés, et les pistes électriquement conductrices de l'antenne.

Or, le procédé d'embossage pour créer des caractères en relief par estampage sur le corps de carte final intégrant l'insert pourvu de l'antenne peut détériorer voire couper les pistes d'antenne dans la zone où l'antenne et les caractères embossés doivent coexister.

Afin de remédier à la coupure des pistes d'antenne, il est prévu dans l'état de la technique, de réaliser des pistes d'antenne plus larges que la hauteur maximale des caractères embossés, de sorte que l'embossage des caractères n'arrive pas à couper entièrement une piste d'antenne. Mais ce problème est compliqué par le fait que la tolérance de positionnement de l'antenne dans le corps de carte est de l'ordre de 1,5 mm. Par conséquent, pour assurer qu'une piste d'antenne résiste à l'embossage, il faut que sa largeur soit supérieure à la hauteur d'un caractère, augmentée de la tolérance de positionnement de l'antenne.

Les documents US 6 049 461 A et EP 1 107 175 A2 sont représentatifs de cet état de la technique, dans lequel on s'est contenté d'élargir les pistes situées dans la zone d'embossage, au-delà de la hauteur des caractères embossés pour laisser subsister une partie de spire non coupée par l'embossage.

Cependant, cet élargissement des pistes d'antennes a créé un nouveau problème, dans la mesure où l'expérience a prouvé que des pistes d'antenne plus larges nuisent à la cohésion des couches constituant le corps de carte. Plus précisément, il s'avère que le corps de carte est sujet à une délamination, donc à une séparation des couches externes de protection de la carte. Cette délamination se produit principalement au niveau des pistes larges d'antenne. Par conséquent, plus les pistes d'antenne sont larges, plus on augmente le risque de délamination.

En outre, la norme CQM2.03 portant sur la résistance à la délamination est amenée à se durcir, l'adhésion des pistes conductrices de l'antenne devant résister à des contraintes de 7 Newton/cm$^2$, au lieu de 3,5 N/Cm$^2$ antérieurement.

## But de l'invention

Le but général de l'invention est par conséquent de proposer une conception optimisée d'antenne, permettant de résoudre le problème technique évoqué plus haut.

## Résumé de l'invention

Selon le principe de l'invention, les pistes larges se trouvant sous la zone d'embossage sont dédoublées par deux ou plusieurs pistes plus fines et donc moins sensibles à la délamination, connectées électriquement en parallèle. En outre, afin d'éviter que ces pistes plus fines ne soient coupées lors de l'embossage des caractères, les pistes fines sont positionnées sur l'insert de telle manière qu'au moins une des pistes de chaque ensemble de pistes en parallèle reste en dehors de la zone des caractères, de manière à ce que l'opération d'embossage ne puisse jamais couper la continuité électrique de l'antenne, même en prenant en compte les tolérances de positionnement de l'antenne (et donc des pistes) dans le corps de carte.

L'Invention a par conséquent pour objet une carte à puce sans contact selon la revendication 1.

Selon une première configuration de pistes, les lignes de caractères ont une hauteur h et sont séparées d'un interligne de largeur i et l'antenne comporte une paire de pistes connectées en parallèle et situées chacune au moins partiellement en regard d'au moins une ligne de caractères, et une paire de pistes de l'antenne, lesquelles sont espacées d'un intervalle d1 = h+i.

En outre, le positionnement et le dimensionnement d'une paire de pistes sont tels que lorsqu'une première piste empiète d'une valeur c sur un interligne entre deux lignes de caractères, l'autre piste empiète également d'une valeur c sur un autre interligne entre deux autres lignes de caractères.

Dans ce mode de réalisation, la largeur des pistes est sensiblement égale à 1.5 mm. Selon une autre configuration de pistes, les lignes de caractères ont une hauteur h et sont séparées d'un interligne de largeur i et l'antenne comporte une première piste de largeur l1 située au moins partiellement en regard d'au moins une ligne de caractères et une seconde piste de largeur l2 située à la périphérie de la zone d'embossage, et les pistes sont espacées d'un intervalle d2 = h - l1. Dans ce cas, les largeurs l1, l2 des pistes respectives sont sensiblement égales à l1 = T - i + c et l2 = c, où T désigne la tolérance de positionnement de l'antenne dans le corps de carte, i désigne l'intervalle entre deux lignes de caractères, et c désigne l'épaisseur minimale restante de piste pour assurer la continuité électrique de la piste.

Grâce à cette conception d'antenne, quelle que soit la position, dans la limite de la tolérance T, de l'insert et de son antenne par rapport au corps de carte lors de l'assemblage puis de l'embossage de la carte, au moins l'une des deux pistes connectées en parallèle reste fonctionnelle, dans la mesure où l'opération d'embossage des caractères ne peut pas totalement la couper, du fait qu'il reste, au niveau de chacun des caractères, au moins une portion de piste non coupée par l'opération d'embossage, ce qui garantit la continuité électrique de cette piste.

De préférence, les deux pistes dédoublées connectées en parallèle sont connectées par des ponts d'interconnexion, ce qui a pour effet de limiter l'effet de coupure de certaines pistes lors de l'embossage des caractères. La largeur des ponts d'interconnexion est alors sensiblement égale à T - j + 2c, où T désigne la tolérance de positionnement de l'antenne dans le corps de carte, j désigne l'intervalle entre deux colonnes de caractères, et c désigne l'épaisseur minimale restante de piste pour assurer la continuité électrique de la piste.

Deux ponts voisins sont espacés d'une distance D sensiblement égale à n(e + j), où e est la largeur d'un caractère et i l'intervalle entre deux caractères voisins, et n est le nombre de caractères entre deux ponts, n étant à optimiser suivant la quantité de métal souhaitée pour l'antenne.

L'invention a également pour objet une carte à puce comprenant une antenne optimisée comme décrit plus haut.

D'autres caractéristiques et avantages de l'invention apparaîtront à la lecture de la description détaillée et des dessins annexés dans lesquels :

- la figure 1 représente une carte à puce sans contact connue, en vue en plan, faisant apparaître la zone d'embossage des caractères et l'antenne ;
- la figure 2 représente une autre carte à puce sans contact connue, dans laquelle l'antenne est située en-dehors de la zone d'embossage des caractères ;
- la figure 3 représente une carte à puce sans contact selon l'invention, pourvue d'une antenne dont les pistes situées dans la zone d'embossage sont dédoublées ;
- la figure 4A représente une vue plus détaillée de la zone d'embossage de la carte à puce de la figure 3, pour le cas des pistes entourées de 2 lignes de caractères ;
- la figure 4B représente une vue plus détaillée de la zone d'embossage de la carte à puce de la figure 3, pour le cas des pistes d'antenne situées en bordure de carte ;
- la figure 5 représente une vue plus détaillée de la zone d'embossage de la carte à puce de la figure 3, dans le cas d'un décalage de l'antenne vers le haut ;
- la figure 6 représente une vue plus détaillée de la zone d'embossage de la carte à puce de la figure 3, dans le cas d'un décalage de l'antenne vers le bas;
- la figure 7 représente une variante de réalisation de l'antenne selon l'invention ;
- la figure 8 représente une vue plus détaillée du mode de réalisation selon la figure 7 ;

**Description détaillée**

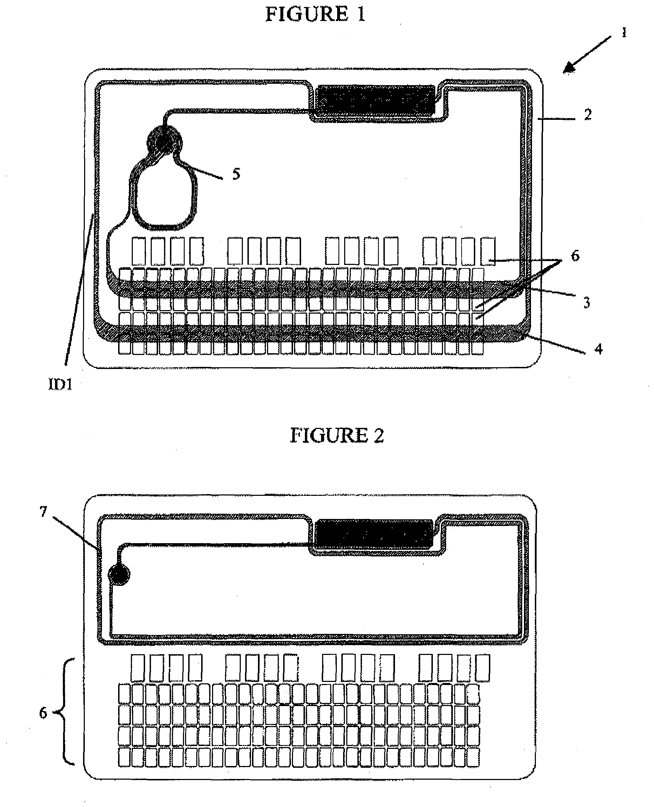

On se réfère à la Figure 1. La carte à puce 1 connue, représentée en vue en plan, comporte un corps de carte 2 pourvu d'une antenne principale dite antenne ID1, constituée de deux spires de grande taille, et d'une antenne secondaire ou concentrateur 5 destiné à concentrer le flux électromagnétique. Les spires de l'antenne ID1 (notée simplement ID1 dans la figure 1), à savoir les spires de grande taille qui longent les bords de carte et ont donc un format proche du format ID1, chevauchent la zone du corps de carte destinée à recevoir les lignes de caractères alphanumériques 6. Les emplacements des caractères à embosser sont représentés par des rectangles, les caractères eux-mêmes ne sont pas représentés, ils varient d'une carte à l'autre.

Compte tenu de la tolérance T d'environ 1,5 mm du positionnement de l'antenne ID1 dans le corps de carte, les tronçons horizontaux des spires de l'antenne ID1 peuvent se retrouver à des positions variables d'une carte à l'autre. En particulier, les pistes 3,4 de l'antenne ID1 peuvent se superposer à une ligne de caractères 6, de sorte que ces pistes puissent être rompues lors de l'opération d'embossage, ce qui bien entendu rend la carte non fonctionnelle.

Pour éviter cela, il est prévu dans l'état de la technique correspondant à la figure 1, que les pistes 3,4 de l'antenne ID1 soient conçues légèrement plus larges qu'une ligne de caractères, de sorte que l'embossage des caractères ne puisse pas complètement couper une piste. Mais comme expliqué plus haut, cette conception avec des pistes larges rend les cartes à puce plus sensibles au problème de délaminage des cartes.

Une autre façon connue de tenter de remédier au problème consiste, comme représenté en figure 2, de réaliser l'antenne principale 7 non pas au format dit ID1, mais avec des spires plus petites, qui ne chevauchent pas la zone d'embossage des caractères. Mais cette mesure réduit le flux électromagnétique capté par l'antenne et a donc un effet négatif sur les performances de communication de l'antenne. En particulier, elle réduit la portée de communication de la carte à puce sans contact.

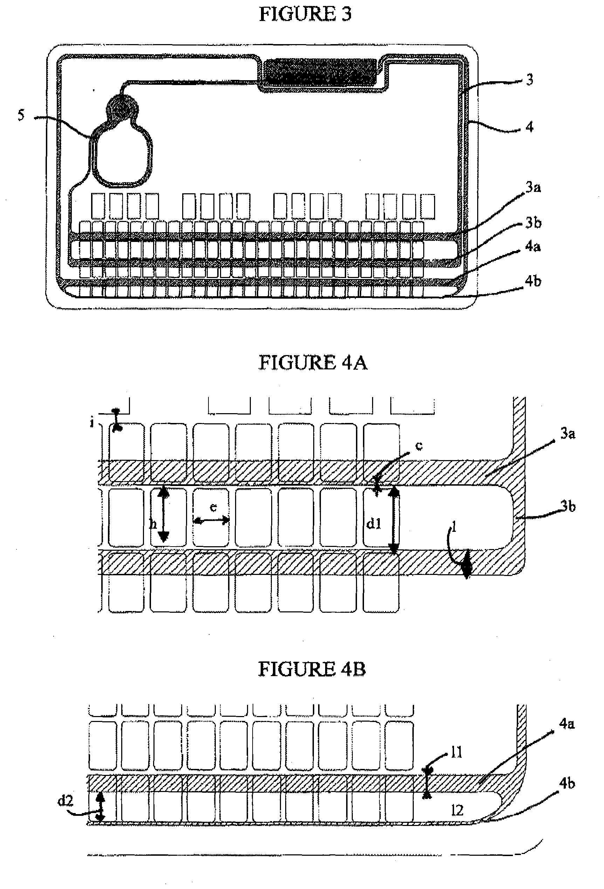

On se réfère aux figures 3 et 4A, 4B pour expliquer la solution selon l'invention. Comme on le voit, la piste 3 de la carte à puce 1 de la figure 1 a été remplacée par deux pistes 3a, 3b connectées électriquement en parallèle, et ayant chacune une largeur plus faible que la piste large 3 de la figure 1. De même, la piste 4 de la carte à puce 1 de la figure 1 a été remplacée par deux pistes 4a, 4b connectées électriquement en parallèle, et ayant chacune une largeur plus faible que la piste large 4 de la figure 1.

De plus, comme on le voit sur les figures 4A, 4B montrant un agrandissement de la figure 3 dans deux cas différents, à savoir le cas d'une paire de pistes (3a, 3b) entourée par des lignes de caractères 6 au dessus et en-dessous des lignes (figure 4A), et le cas d'une paire de pistes (4b) située en bordure de carte (figure 4B), les positions et dimensions des paires de pistes (3a, 3b) et (4a, 4b) sont calculées de manière spécifique pour d'une part conserver des propriétés radiofréquence acceptables, et d'autre part pour résoudre le problème posé par l'embossage des caractères.

On définit les paramètres suivants :

- I désigne la largeur des pistes 3a, 3b,
- I1, I2 désigne la largeur respective des pistes 4a, 4b
- h désigne la hauteur des caractères 6 et e leur largeur
- i désigne l'intervalle horizontal entre deux lignes de caractères 6
- j désigne l'intervalle vertical entre deux colonnes de caractères 6
- d1, d2 désignent respectivement la distance entre deux paires de pistes (3a,3b) et (4a,4b)
- T désigne la tolérance de positionnement de l'antenne dans le corps de carte
- c désigne la largeur minimale restante désirée d'une piste partiellement coupée, capable d'assurer la continuité électrique de la piste.

Afin de résoudre le problème posé par l'embossage des caractères et la nécessité d'assurer la continuité électrique des pistes, les pistes 3a et 3b sont séparées d'une distance d1 qui est supérieure à la hauteur h d'un caractère 6, sans tomber complètement dans la zone d'embossage d'une ligne de caractères voisine. De préférence, les pistes 3a, 3b sont dimensionnées et positionnées de manière à ce qu'il reste au moins une largeur c allant de 100 à 200 micromètres de piste en-dehors de la zone d'embossage des caractères.

On a alors, comme cela ressort de la figure 4A : d1 = h + i/2 + i/2 = h + i Autrement dit, l'invention prévoit que la distance entre deux paires de pistes (3a, 3b) connectées en parallèle et entourées de lignes de caractères embossés soit égale à la hauteur d'un caractère plus l'intervalle i entre deux lignes de caractères 6.

En outre, l'invention prévoit que la largeur I des pistes dédoublées (3a,3b) est comme suit :

$$I = T - i + 2c,$$

en ce qui concerne les pistes 3a, 3b (figure 4A), où c est la largeur restante minimale de la piste partiellement coupée.

Ces dispositions assurent que l'embossage de la piste 3a ou de la piste 3b laisse subsister sur chacune de ces pistes une ligne conductrice de largeur minimale égale à i/2, permettant le fonctionnement adéquat de l'antenne, malgré la tolérance de positionnement T de l'antenne dans la carte.

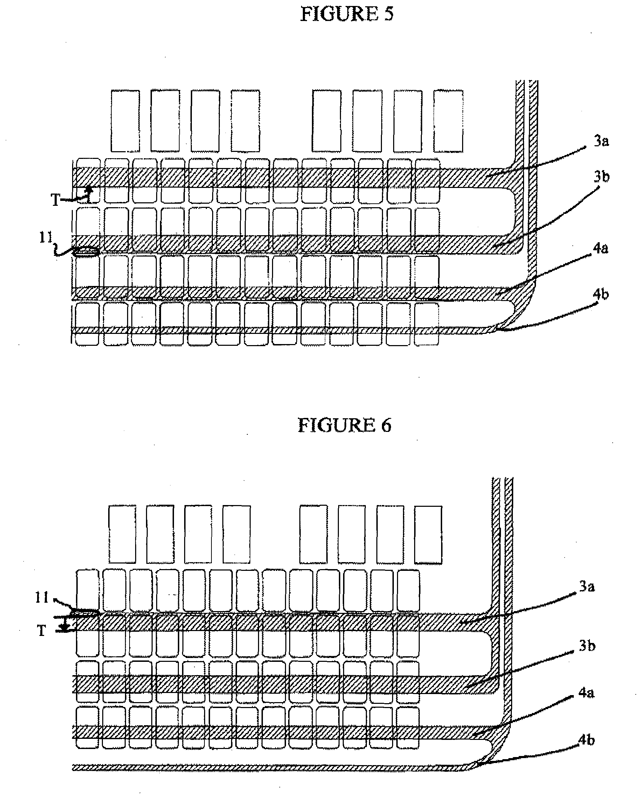

En effet, supposons que l'antenne soit décalée d'une valeur T par rapport à sa position telle que représentée en figure 4A, par un décalage vers le haut comme représenté en figure 5, ou vers le bas comme représenté en figure 6. Dans le premier cas, la piste 3a se trouvera dans la zone d'embossage et risque d'être coupée. Par contre, la piste 3b se trouvera partiellement dans la zone d'embossage, mais comportera une zone 11 située nécessairement en-dehors de la zone d'embossage, et d'épaisseur minimale i/2, permettant le fonctionnement de l'antenne. Dans le second cas, c'est la piste 3b qui sera coupée, et la piste 3a qui gardera une zone 11 située en-dehors de la zone d'embossage.

Comme cela ressort de la figure 4B correspondant au cas où seule une piste 4a est entourée de caractères, on a en ce qui concerne la largeur respective des pistes 4a, 4b. :

$$I1 = T - i + c$$

I2 = c

De plus, les pistes 4a, 4b sont séparées d'une distance d2 = h - I1.

Ces dispositions assurent que l'embossage au voisinage des pistes 4a, 4b laisse subsister une ligne conductrice de largeur minimale égale à I1 - i/2, permettant le fonctionnement adéquat de l'antenne, malgré la tolérance de positionnement T de l'antenne dans la carte.

En effet, supposons que l'antenne soit décalée d'une valeur T par rapport à sa position telle que représentée en figure 4B, par un décalage vers le haut comme représenté en figure 5, ou vers le bas comme représenté en figure 6. Dans le premier cas, la piste 4b se trouvera intégralement dans la zone d'embossage et serait coupée, par contre la piste 4a se trouvera partiellement en dehors de la zone d'embossage. Dans le second cas (décalage vers le bas), la piste 4a se trouvera dans la zone d'embossage, mais la piste 4b se trouvera intégralement en-dehors de cette zone.

En outre, ces dispositions permettent de réduire la largeur l2 des pistes de type 4b situées en bordure, ce qui va dans le sens d'une moindre sensibilité à la délamination, sans nuire à la continuité électrique de l'antenne.

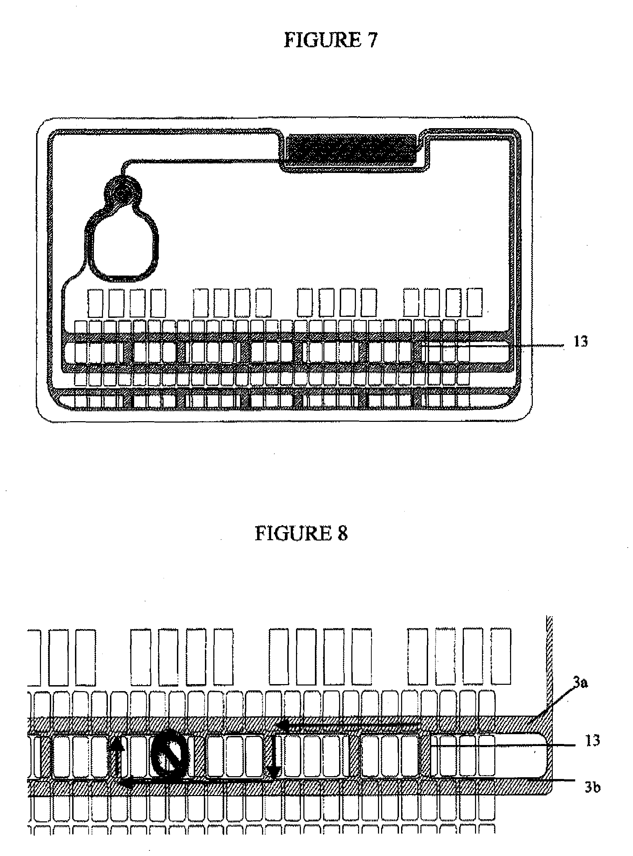

Certes, toute coupure d'une piste 3a, 3b, 4a ou 4b aura une incidence sur la valeur de l'inductance de l'antenne, dont les performances seront nécessairement un peu modifiées. Afin de limiter l'incidence d'une coupure d'une des pistes appariées, l'invention prévoit un mode de réalisation préférentiel, représenté dans les figures 7 et 8. A cet effet, l'invention prévoit des ponts 13 pour l'interconnexion à intervalles réguliers, des pistes appariées (3a,3b), (4a,4b).

Afin de compenser les effets de la tolérance T de positionnement de l'antenne dans la carte, la largeur de ces ponts 13 est égale à la largeur des pistes connectées, soit également la valeur de la tolérance T.

Si les caractères sont espacés horizontalement d'un intervalle j et si les caractères ont une largeur e, alors les ponts 13 voisins sont de préférence espacés d'une distance $D = n(e + j)$, où n est un nombre entier.

De cette manière, les ponts 13 échapperont au moins partiellement à une coupure due à l'embossage.

**Avantages de l'invention**

En définitive, l'invention propose une conception d'antenne pour carte à puce, permettant d'atteindre les buts visés. En particulier, les pistes d'antenne plus fines dans la zone d'embossage réduisent le risque de délamination de la carte. En outre, cette conception est compatible avec les opérations d'embossage des caractères, puisqu'aucune des pistes qui coexistent avec la zone d'embossage ne peut être rompue totalement pendant l'embossage.

**Revendications**

1. Carte à puce sans contact comprenant une antenne, disposée sur un insert destiné à être intégré à ladite carte à puce avec une certaine tolérance T de positionnement relatif vertical ou horizontal entre l'insert et le corps de carte, ladite carte à puce étant pourvue d'une zone d'embossage comportant des lignes de caractères (6) embossées en relief, au moins une spire (3,4) de l'antenne étant située en regard de la zone d'embossage, ladite spire (3,4) comportant au moins une paire de pistes (3a, 3b ; 4a,4b) situées dans la zone d'embossage et connectés en parallèle et configurées de manière à ce qu'au moins l'une d'elles (3a,3b ; 4a,4b) reste au moins partiellement située en-dehors de la zone des caractères embossés quelle que soit la position relative de l'insert et de son antenne permise par la tolérance T, **caractérisée en ce que** la largeur l des pistes (3a, 3b) d'une spire connectées en parallèle est sensiblement égale à $T- i + 2c$ où T désigne la tolérance de positionnement de l'antenne dans le corps de carte, i désigne l'intervalle entre deux lignes de caractères (6), et c désigne la largeur minimale de piste admissible pour assurer la continuité électrique de ladite piste.

2. Carte à puce selon la revendication 1, dans laquelle les lignes de caractères (6) ont une hauteur h et sont séparées d'un interligne de largeur i et l'antenne comporte une paire de pistes (3a, 3b) connectées en parallèle et situées chacune au moins partiellement en regard d'au moins une ligne de caractères (6), **caractérisée en ce que** lesdites pistes (3a,3b) de l'antenne sont espacées d'un intervalle $d1 = h + i$.

3. Carte à puce selon l'une des revendications précédentes, **caractérisée en ce que** le positionnement et le dimensionnement d'une paire de pistes (3a, 3b) d'une spire (3) sont tels que lorsqu'une première piste (3a) empiète d'une valeur c sur un interligne entre deux lignes de caractères (6), l'autre piste (3b) empiète également d'une valeur c sur un autre interligne entre deux autres lignes de caractères.

4. Carte à puce selon la revendication 1, dans laquelle les lignes de caractères (6) ont une hauteur h et sont séparées d'un interligne de largeur i et l'antenne comporte une première piste (4a) de largeur l1 située au moins partiellement en regard d'au moins une ligne de caractères (6) et une seconde piste (4b) de largeur l2 située à la périphérie de la zone d'embossage, **caractérisée en ce que** lesdites pistes (4a, 4b) sont espacées d'un intervalle $d2 = h-l1$.

5. Carte à puce selon la revendication 4, **caractérisée en ce que** les largeurs l1, l2 desdites pistes respectives (4a, 4b) sont sensiblement égales à $l1 = T- i + c$ et $l2 = c$, où T désigne la tolérance de positionnement de l'antenne dans le corps de carte, i désigne l'intervalle entre deux lignes de caractères (6), et c désigne l'épaisseur minimale restante de piste pour assurer la continuité électrique de la piste.

6. Carte à puce selon l'une quelconque des revendications précédentes, **caractérisée en ce que** chaque paire de pistes (3a, 3b ;4a,4b) connectées en parallèle est interconnectée par des ponts d'interconnexion (13) aptes à limiter l'effet de coupure d'une des pistes (3a, 3b ; 4a,4b) lors de l'embossage des caractères.

**7.** Carte à puce selon la revendication 6, **caractérisée en ce que** deux ponts voisins sont espacés d'une distance D sensiblement égale à n(e + j), où e est la largeur d'un caractère, j est l'intervalle entre deux colonnes de caractères voisins, et n est le nombre de caractères espaçant deux ponts d'interconnexion (13) successifs.

**8.** Carte à puce selon la revendication 6 ou la revendication 7, **caractérisée en ce que** la largeur des ponts d'interconnexion est sensiblement égale à T - j + 2c, où T désigne la tolérance de positionnement de l'antenne dans le corps de carte, j désigne l'intervalle entre deux colonnes de caractères, et c désigne l'épaisseur minimale restante de piste pour assurer la continuité électrique de la piste.

**9.** Carte à puce selon l'une quelconque des revendications précédentes, comportant une zone d'embossage présentant des lignes de caractères en relief réalisés par embossage.

**Patentansprüche**

**1.** Kontaktlose Chipkarte, welche eine Antenne umfasst, die auf einem Einsatz angeordnet ist, der dazu bestimmt ist, in die Chipkarte mit einer gewissen Toleranz T der vertikalen oder horizontalen relativen Positionierung zwischen dem Einsatz und dem Kartenkörper integriert zu werden, wobei die Chipkarte mit einem Prägebereich versehen ist, der Zeilen von reliefgeprägten Zeichen (6) aufweist, wobei sich wenigstens eine Windung (3, 4) der Antenne gegenüber dem Prägebereich befindet, wobei die Windung (3, 4) wenigstens ein Paar Leiterbahnen (3a, 3b; 4a, 4b) aufweist, die sich im Prägebereich befinden und parallel geschaltet sind und derart ausgebildet sind, dass wenigstens eine von ihnen (3a, 3b; 4a, 4b) unabhängig von der durch die Toleranz T ermöglichten relativen Position des Einsatzes und seiner Antenne wenigstens teilweise außerhalb des Bereichs der geprägten Zeichen befindlich bleibt, **dadurch gekennzeichnet, dass** die Breite I der parallel geschalteten Leiterbahnen (3a, 3b) einer Windung im Wesentlichen gleich T - i + 2c ist, wobei T die Toleranz der Positionierung der Antenne im Kartenkörper bezeichnet, i das Intervall zwischen zwei Zeilen von Zeichen (6) bezeichnet und c die minimale zulässige Leiterbahnbreite zur Sicherstellung der elektrischen Kontinuität der Leiterbahn bezeichnet.

**2.** Chipkarte nach Anspruch 1, wobei die Zeilen von Zeichen (6) eine Höhe h aufweisen und durch einen Zeilenzwischenraum der Breite i getrennt sind und die Antenne ein Paar Leiterbahnen (3a, 3b) aufweist, die parallelgeschaltet sind und sich jeweils wenigstens teilweise gegenüber wenigstens einer Zeile von Zeichen (6) befinden, **dadurch gekennzeichnet, dass** die Leiterbahnen (3a, 3b) der Antenne um ein Intervall d1 = h + i beabstandet sind.

**3.** Chipkarte nach einem der vorhergehenden Ansprüche, **dadurch gekennzeichnet, dass** die Positionierung und die Bemessung eines Paares von Leiterbahnen (3a, 3b) einer Windung (3) so beschaffen sind, dass, wenn eine erste Leiterbahn (3a) auf einer Breite c in einen Zeilenzwischenraum zwischen zwei Zeilen von Zeichen (6) hineinreicht, die andere Leiterbahn (3b) ebenfalls auf einer Breite c in einen anderen Zeilenzwischenraum zwischen zwei anderen Zeilen von Zeichen hineinreicht.

**4.** Chipkarte nach Anspruch 1, wobei die Zeilen von Zeichen (6) eine Höhe h aufweisen und durch einen Zeilenzwischenraum der Breite i getrennt sind und die Antenne eine erste Leiterbahn (4a) der Breite 11, die sich wenigstens teilweise gegenüber wenigstens einer Zeile von Zeichen (6) befindet, und eine zweite Leiterbahn (4b) der Breite 12, die sich am Umfang des Prägebereichs befindet, aufweist, **dadurch gekennzeichnet, dass** die Leiterbahnen (4a, 4b) um ein Intervall d2 = h - l1 beabstandet sind.

**5.** Chipkarte nach Anspruch 4, **dadurch gekennzeichnet, dass** die Breiten 11, 12 der jeweiligen Leiterbahnen (4a, 4b) im Wesentlichen gleich l1 = T - i + c und l2 = c sind, wobei T die Toleranz der Positionierung der Antenne im Kartenkörper bezeichnet, i das Intervall zwischen zwei Zeilen von Zeichen (6) bezeichnet und c die minimale verbleibende Leiterbahndicke zur Sicherstellung der elektrischen Kontinuität der Leiterbahn bezeichnet.

**6.** Chipkarte nach einem der vorhergehenden Ansprüche, **dadurch gekennzeichnet, dass** jedes Paar von parallel geschalteten Leiterbahnen (3a, 3b; 4a, 4b) durch Verbindungsbrücken (13) verbunden ist, die in der Lage sind, die Auswirkung einer Unterbrechung einer der Leiterbahnen (3a, 3b; 4a, 4b) bei der Prägung der Zeichen zu begrenzen.

**7.** Chipkarte nach Anspruch 6, **dadurch gekennzeichnet, dass** zwei benachbarte Brücken um einen Abstand D beabstandet sind, der im Wesentlichen gleich n(e + j) ist, wobei e die Breite eines Zeichens ist, j das Intervall zwischen zwei benachbarten Spalten von Zeichen ist und n die Anzahl der Zeichen ist, um die zwei aufeinander folgende Verbindungsbrücken (13) beabstandet sind.

**8.** Chipkarte nach Anspruch 6 oder Anspruch 7, **dadurch gekennzeichnet, dass** die Breite der Verbindungsbrücken im Wesentlichen gleich T - j + 2c ist, wobei T die Toleranz der Positionierung der Antenne im Kartenkörper bezeichnet, j das Intervall zwischen zwei Spalten von Zeichen bezeichnet und c die minimale verbleibende Leiterbahndicke zur Sicherstellung der elektrischen Kontinuität der Leiterbahn bezeichnet.

9. Chipkarte nach einem der vorhergehenden Ansprüche, welche einen Prägebereich umfasst, der Zeilen von durch Prägung hergestellten erhabenen Zeichen aufweist.

**Claims**

1. Contactless chip card comprising an antenna placed on an insert intended to be integrated into said chip card with a certain relative vertical or horizontal positioning tolerance T between the insert and the card body, said chip card being provided with an embossing region containing lines of characters (6) embossed in relief, at least one turn (3, 4) of the antenna being located facing the embossing region, said turn (3, 4) comprising at least one pair of tracks (3a, 3b; 4a, 4b) located in the embossing region and connected in parallel and configured so that at least one thereof (3a, 3b; 4a, 4b) remains at least partially located outside of the region of the embossed characters whatever the relative position of the insert and of its antenna permitted by the tolerance T, **characterized in that** the width 1 of the tracks (3a, 3b) of a turn that are connected in parallel is substantially equal to Ti+2c where T designates the positioning tolerance of the antenna in the card body, i designates the interval between two lines of characters (6), and c designates the minimum track width that acceptably ensures the electrical continuity of said track.

2. Chip card according to Claim 1, in which the lines of characters (6) have a height h and are separated by a line spacing of width i and the antenna comprises a pair of tracks (3a, 3b) that are connected in parallel and each located at least partially facing at least one line of characters (6), **characterized in that** said tracks (3a, 3b) of the antenna are spaced apart by an interval d1 = h + i.

3. Chip card according to either of the preceding claims, **characterized in that** the positioning and the sizing of a pair of tracks (3a, 3b) of a turn (3) are such that if a first track (3a) impinges by an amount c on a line spacing between two lines of characters (6), the other track (3b) also impinges by an amount c on another line spacing between two other lines of characters.

4. Chip card according to Claim 1, in which the lines of characters (6) have a height h and are separated by a line spacing of width i and the antenna comprises a first track (4a) of width 11 located at least partially facing at least one line of characters (6) and a second track (4b) of width 12 located on the periphery of the embossing region, **characterized in that** said tracks (4a, 4b) are spaced apart by an interval d2 = h - 11.

5. Chip card according to Claim 4, **characterized in that** the widths 11, 12 of said respective tracks (4a, 4b) are substantially equal to 11 = T-i+c and 12 = c, where T designates the positioning tolerance of the antenna in the card body, i designates the interval between two lines of characters (6), and c designates the minimum remaining track thickness that ensures the electrical continuity of the track.

6. Chip card according to any of the preceding claims, **characterized in that** each pair of tracks (3a, 3b; 4a, 4b) connected in parallel is interconnected by interconnection bridges (13) adapted to limit the effect of cutting of one of the tracks (3a, 3b; 4a, 4b) during the embossing of the characters.

7. Chip card according to Claim 6, **characterized in that** two adjacent bridges are spaced by a distance D substantially equal to n(e+j), where e is the width of a character, j is the interval between two neighbouring columns of characters, and n is the number of characters spacing apart two successive interconnection bridges (13).

8. Chip card according to Claim 6 or Claim 7, **characterized in that** the width of the interconnection bridges is substantially equal to T-j+2c, where T designates the positioning tolerance of the antenna in the card body, j designates the interval between two columns of characters, and c designates the minimum remaining track thickness that ensures the electrical continuity of the track.

9. Chip card according to any of the preceding claims, comprising an embossing region containing lines of characters in relief produced by embossing.

# FIGURE 1

# FIGURE 2

## FIGURE 3

## FIGURE 4A

## FIGURE 4B

# FIGURE 5

3a
3b
4a
4b

T
11

# FIGURE 6

3a
3b
4a
4b

11
T

FIGURE 7

13

FIGURE 8

3a

13

3b

**RÉFÉRENCES CITÉES DANS LA DESCRIPTION**

**Documents brevets cités dans la description**

- US 6049461 A
- EP 1107175 A2